# EUROPEAN PATENT SPECIFICATION

(11) **EP 4 139 031 B1**
(45) Date of publication and mention of the grant of the patent: **08.10.2025**
(21) Application number: 20864261.1
(22) Date of filing: 20.04.2020
(51) Int. Cl.: B01F 27/1145, B01F 27/922, C22B 3/02, C22B 3/26

(54) **MIXING ARRANGEMENT, MIXER SETTLER UNIT AND USE**
MISCHANORDNUNG, MISCHERABSETZBECKENEINHEIT UND VERWENDUNG
AGENCEMENT DE MÉLANGE, UNITÉ DE DÉCANTEUR MÉLANGEUR ET UTILISATION

(43) Date of publication of application: 01.03.2023
(73) Proprietor: Metso Finland Oy, 02230 Espoo (FI)
(72) Inventor: FREDRIKSSON, Henri, 00320 Helsinki (FI); MÄKELÄ, Antti, 00660 Helsinki (FI); LATVA-KOKKO, Marko, 28600 Pori (FI); XIA, Jiliang, 28300 Pori (FI); MÄENPÄÄ, Lauri, 28100 Pori (FI); RITASALO, Teemu, 02760 Espoo (FI)
(74) Representative: Papula Oy
(86) International application number: PCT/FI2020/050258
(87) International publication number: WO 2021/214372

(56) References cited:
- EP-A2- 3 095 510
- WO-A1-2011/070218
- WO-A1-2011/151521
- WO-A1-2012/035207
- WO-A1-2014/096548
- WO-A2-2014/080408
- DE-A1- 102011 085 010

## Description

### BACKGROUND

The invention relates to a mixing arrangement for mixing two solutions.

The invention further relates to a mixer settler unit.

The invention still further relates to a use of the mixing arrangement

Mixer arrangements are used in solvent extraction processes to extend the contact time between the two liquid phases by providing adequate mixing to maintain the dispersion. In the mixer arrangements a mixer circulates the dispersion gently in a mixing space thereby preventing the liquids from settling. However, there are still needs for intensifying and quicken the solvent extraction processes.

WO 2011/070218 A1 discloses a mixing arrangement according to the preamble of claim 1 and discloses a method and equipment wherein flocculant is gently mixed into a slurry with a helical rotor mixer.

### BRIEF DESCRIPTION

Viewed from a first aspect, there can be provided a mixing arrangement for mixing two solutions, wherein the mixing arrangement comprises a mixing device arranged in the mixing space for rotating therein, the mixing device comprising at least two helical bars supported around a shaft and rising upwards from the bottom section of the mixing space, the helical bars being fixed to the shaft with support spokes, wherein the ratio of the diameter D of the mixing device to the average diameter T of the mixing space, that is D/T, is 0.47 at most.

Thereby a mixing arrangement that shortens the separation time of the liquid phases in a settler unit arranged for receiving material from said mixing arrangement may be achieved.

Viewed from a further aspect, there can be provided a mixer settler unit comprising the mixing arrangement as described above, and a settler unit arranged for receiving material from said mixing arrangement.

Thereby a highly efficient mixer settler unit may be achieved.

Viewed from a further aspect, there can be provided use of the mixing arrangement as described above for solvent extraction in the hydrometallurgical recovery of metals. Thereby a solvent extraction process being quick and effective may be achieved.

The arrangement, the mixer settler unit and the use are characterised by what is stated in the independent claims. Some other embodiments are characterised by what is stated in the other claims. Embodiments are also disclosed in the specification and drawings of this patent application.

According to the invention, the ratio D/T is selected in range of 0.38 - 0.47. An advantage is that the separation time of the liquid phases in a settler unit arranged for receiving material from said mixing arrangement may be shortened.

In one embodiment, the ratio D/T is selected in range of 0.40 - 0.45. An advantage is that the separation time of the liquid phases in a settler unit arranged for receiving material from said mixing arrangement may be optimized in relation to the power consumption of the mixing arrangement.

In one embodiment, the ratio of the height H of the helical bars to liquid surface height L, that is H/L, is 0.6 - 0.9, preferably 0.8 - 0.9. An advantage is that effectiveness of the arrangement for maintaining the dispersion may be increased.

In one embodiment, the ratio of the height H of the helical bars to the diameter D, that is H/D, is at least 1, preferably 1.5 - 2. An advantage is that effectiveness of the arrangement for maintaining the dispersion may be increased.

In one embodiment, the mixing device comprises at least three helical bars. An advantage is that amount of pressure pulses caused to the dispersion per revolution of the mixing device may be increased.

In one embodiment, the helical bar has a round profile. An advantage is that lower local shear forces are created.

In one embodiment, diameter of the helical bar is selected in range of 0.03 x T - 0.05 x T. An advantage is that the mixing properties of the helical bar may be enhanced.

In one embodiment, the supporting spoke is straight, first end attached to the helical bar, and second end arranged to the shaft, wherein and the angle between the spoke and the shaft is 75° - 105°, preferably 85° - 95°, more preferably 90°. An advantage is that disturbance caused by the spokes to flow created by the helical bar may be decreased.

In one embodiment, the number of the supporting spokes is 6 to 12. An advantage is that a good balance between initial investment costs and structural strength of the mixing device may be achieved.

In one embodiment, the supporting spoke has a round profile. An advantage is that lower local shear forces are created. In one embodiment, the mixing space has an upper part and a lower part, and wherein the ratio of the diameter TU of the upper part and the diameter TL of the lower part is selected in range of 0.8 - 1.2, preferably 0.9 - 1.1. An advantage is that a shape of the mixing space assisting formation and maintaining the dispersion may be achieved.

In one embodiment, the mixing space has a cylindrical shape. An advantage is that a shape of the mixing space assisting formation and maintaining the dispersion may be achieved.

In one embodiment, the mixing space has a shape of truncated cone. An advantage is that the mixing space may be manufactured e.g. by casting.

In one embodiment, the average diameter of the mixing space is at least 1000 mm, preferably 1000 - 5000 mm. An advantage is that a capacity of the arrangement suitable for industrial processes, such as a solvent extraction in the hydrometallurgical recovery of metals, may be achieved.

In one embodiment, the mixing space is provided with one or more blocking elements. An advantage is that flow pattern of the mixing arrangement may be optimized for formation and maintaining the dispersion.

In one embodiment, the blocking element has a shape that extends in the same direction as the shaft. An advantage is that flow pattern of the mixing arrangement may be optimized for formation and maintaining the dispersion.

In one embodiment, the blocking element is arranged to a side wall of the mixing space. An advantage is that the structure is simple.

In one embodiment, the blocking elements comprise a baffle. An advantage is that an effective structure for working flow pattern of the mixing arrangement may be achieved.

In one embodiment, the mixer settler unit comprises at least two mixing arrangements arranged in series, and the settler unit is arranged for receiving material from the last of said mixing arrangements. An advantage is that the retention time may be extended, and thus high efficiency may also be reached in highly demanding extraction processes.

In one embodiment, it is provided use of the mixing arrangement for solvent extraction in the hydrometallurgical recovery of at least one metal, preferably selected from Cu, Ni, Co, Mg, Mn, Zn, Fe, U and B. An advantage is that a process being quick and effective in the recovery of the metal may be achieved.

### BRIEF DESCRIPTION OF FIGURES

Some embodiments illustrating the present disclosure are described in more detail in the attached drawings, in which
Figure 1 is a schematic side view of a mixer settler unit in partial cross-section,
Figure 2 is a schematic perspective view of a mixing arrangement in partial cross-section,
Figure 3 is a schematic side view of a mixing device of the mixing arrangement shown in Figure 2,
Figure 4 is a schematic top view of the mixing device of the mixing arrangement shown in Figure 2,
Figure 5 schematic side view showing a flow pattern of a mixing arrangement,
Figure 6 schematic side view showing a flow pattern of another mixing arrangement,
Figure 7 schematic side view showing a flow pattern of a third mixing arrangement,
Figure 8 illustrates power requirement of some arrangements, and
Figure 9 illustrates separation time results of the arrangements illustrated in Figure 8.

In the figures, some embodiments are shown simplified for the sake of clarity. Similar parts are marked with the same reference numbers in the figures.

### DETAILED DESCRIPTION

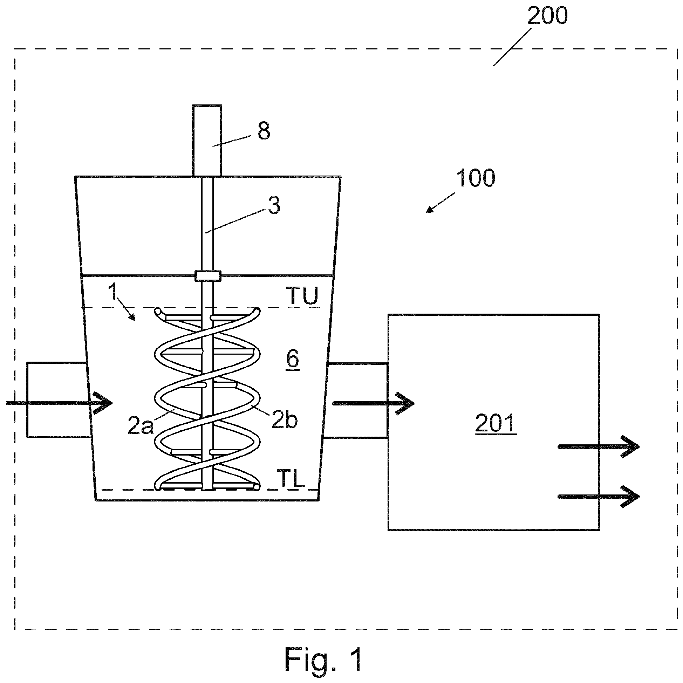

**Figure 1** is a schematic side view of a mixer settler unit in partial cross-section. The mixer settler unit 200 may be used for solvent extraction method used in hydrometallurgical recovery of metals. In a mixing arrangement 100, two mutually insoluble or poorly soluble solutions, fed from e.g. a pump in the mixing arrangement 100, are mixed together to form a dispersion. After the mixing, the dispersion is routed to a settler unit 201, in which the purpose is to separate the dispersion again into two pure layers one on top of the other.

The mixer settler unit 200 may comprise one mixing arrangement 100 (as in Figure 1) or two or more mixing arrangements 100 arranged in series. In the latter case, the settler unit 201 is arranged for receiving material from the last of said mixing arrangements 100. The settler unit 201 may comprise one or more units.

The mixing arrangement 100 comprises a mixing device 1 that is arranged in a mixing space 6 for rotating therein. The mixing device 1 comprises at least two helical bars 2a, 2b that are attached to and around a shaft 3. The shaft is rotated by a motor 8, that is e.g. an electrical motor.

Apart from the mixing arrangement 100 and the settler unit 201, the mixer settler unit 200 may comprise further apparatuses, such as a pump, a piping etc.

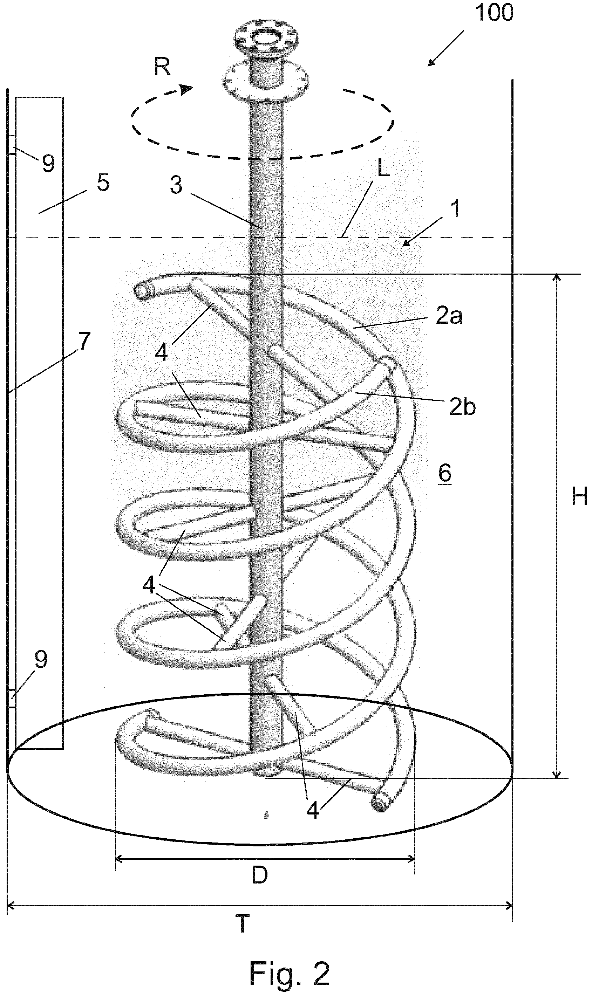

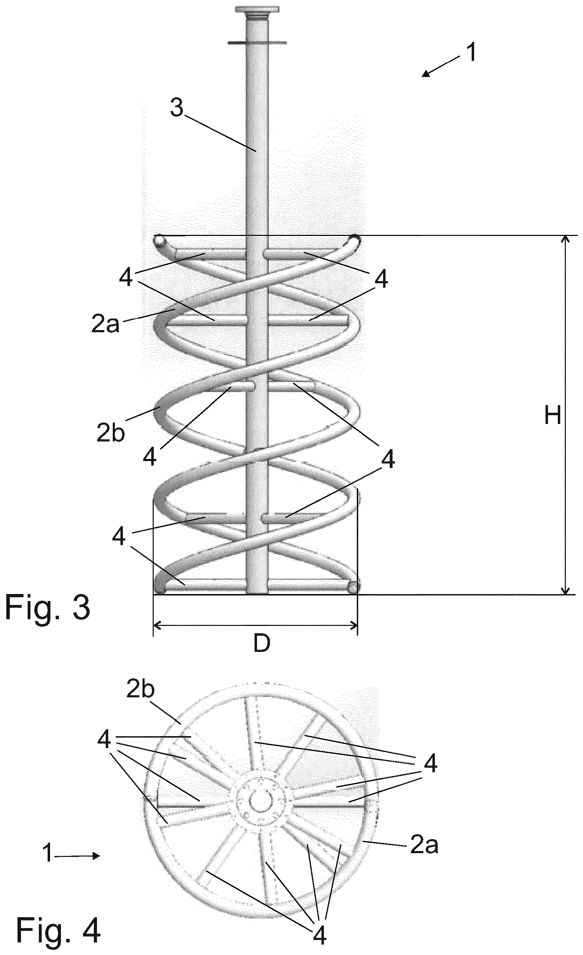

**Figure 2** is a schematic perspective view of a mixing arrangement in partial cross-section, **Figure 3** is a schematic side view of a mixing device of the mixing arrangement shown in Figure 2 and **Figure 4** is a schematic top view of the mixing device of the mixing arrangement shown in Figure 2.

The mixing arrangement 100 comprises a mixing device 1 arranged in a mixing space 6. The mixing device 1 comprises at least two helical bars 2a, 2b supported around a shaft 3 and rising upwards from the bottom section of the mixing space 6. The rotation direction R of the mixing device is shown in Figure 2. It is to be noted, however, that if the rising direction of the bars 2a, 2b is opposite to that shown in Figure 2, also the rotation direction R is opposite to that shown in Figure 2.

In an embodiment, the mixing device 1 is arranged at a distance from the bottom wall of the mixing space 6, as best shown in Figure 1. Said distance may be e.g. in the order of 3-16 %, for instance 5 %, of average diameter T of the mixing space. An advantage is that the mixing device 1 is easy to install and maintain in the apparatus.

In another embodiment, the mixing device 1 is arranged in contact with the bottom wall of the mixing space 6. The shaft 3 may, for instance, be bearing-mounted to the bottom wall. An advantage is that the mixing device is supported on both ends, and thus its structure is robust.

In an embodiment, the pitch angle of the bars 2a, 2b is selected to be between 10°-30° to the horizontal. In an embodiment, the pitch angle is selected in range of 11°-25°.

In an embodiment, the bars 2a, 2b travel two full turns around the shaft 3. The helical bars 2a, 2b are fixed to the shaft 3 with support spokes 4. It is to be noted, however, that the bars 2a, 2b may travel more or less than two full turns.

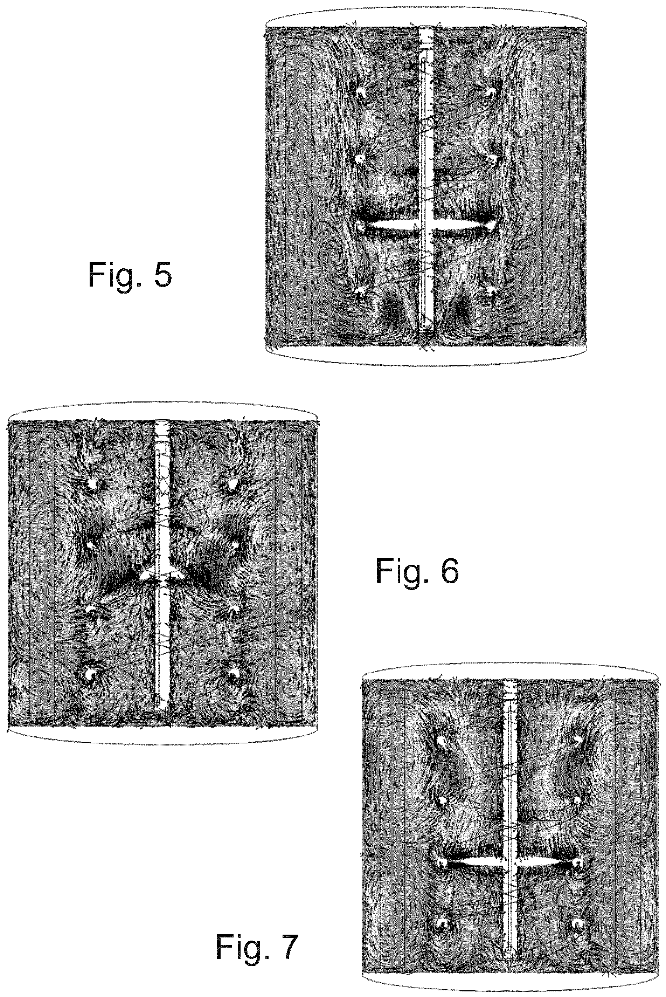

The ratio of the diameter D of the mixing device 1 to the average diameter T of the mixing space, that is D/T, is 0.47 at most. According to the invention, the ratio D/T is selected in range of 0.38 - 0.47. In one embodiment, the ratio D/T is selected in range of 0.40 - 0.45. The effect of the ratio D/T to the mixing efficiency of the mixing arrangement 100 is discussed more detailed in connection with Figures 5 -7.

In one embodiment, the ratio of the height H of the helical bars 2a, 2b to liquid surface height L, i.e. H/L, is 0.6 - 0.9. In another embodiment, said ratio H/L is 0.8 - 0.9.

In one embodiment, the ratio of the height H of the helical bars 2a, 2b to the diameter D of the mixing device 1, that is H/D, is at least 1. In one embodiment, H/D is 1.5 - 2.

In one embodiment (not shown), the mixing device 1 comprises at least three helical bars 2a, 2b.

In one embodiment, the helical bar 2a, 2b may comprise e.g. a metal tube.

In one embodiment, the helical bar 2a, 2b has a round profile. The diameter of the round bar 2a, 2b may be selected e.g. in range of 0.03 x T - 0.05 x T.

In another embodiment, the profile of the helical bar 2a, 2b has an elliptical shape. In still another embodiment, the profile of the helical bar 2a, 2b has a polygon shape.

In one embodiment, the supporting spoke 4 is straight, a first end of which is attached to the helical bar 2a, 2b and a second end arranged to the shaft 3. The supporting spoke 4 shown in Figures is construed from a round metallic tube material. In another embodiment, the profile is elliptical. In still another embodiment, the shape is polygonal.

In an embodiment, both the helical bar 2a, 2b and the supporting spoke 4 have a round shape. The diameter of the spoke 4 may be at least essentially the same as of the helical bar, or alternatively, said diameters are essentially different.

The angle between the spoke 4 and the shaft 3 is selected in range of 75° - 105°. In one embodiment, said angle is 85° - 95°. In one embodiment, said angle is 90° or at least essentially 90°.

In one embodiment, the number of the supporting spokes 4 is selected in range of 6 to 12. The supporting spokes 4 are arranged on several locations or heights along the height H of the helical bars. In an embodiment, the supporting spokes 4 are arranged on three to six levels. In the embodiment shown in Figures 2 - 4, the spokes are arranged on six levels that are located at regular intervals along said height H, and the uppermost and the lowest spokes are arranged at the uppermost and the lowest end, respectively, of the helical bars, or at least close proximity thereof.

In an embodiment, the mixing space 6 has a circular cross-section as seen from above. The mixing space 6 has an upper part and a lower part. The upper part has an upper diameter TU, whereas the lower part has a lower diameter TL. The upper diameter TU is diameter measured at the level of the upper end of the helical bars, and the lower diameter TL is diameter measured at the level of the lower end of the helical bars 2a, 2b (as shown in Figure 1).

In one embodiment, the ratio of the diameter TU of the upper part and the diameter TL of the lower part, i.e. TU/TL, is selected in range of 0.8 - 1.2, in another embodiment 0.9 - 1.1.

In one embodiment, such as shown in Figure 2, the mixing space 6 has a cylindrical shape. In another embodiment, such as shown in Figure 1, the mixing space 6 has a shape of truncated cone, wherein the diameter TU is larger than the diameter TL. In still another embodiment (not shown) the mixing space 6 has a shape of truncated cone, wherein the diameter TL is larger than the diameter TU. In still another embodiment (not shown) the shape of the mixing space 6 is a combination of cylindrical and conical shapes.

In one embodiment, the average diameter T of the mixing space is at least 1000 mm, preferably 1000 - 5000 mm.

In one embodiment, the mixing space 6 is provided with one or more blocking elements 5. The shape of the blocking element(s) 5 has a shape that extends in the same direction as the shaft 3. Thus, the blocking element 5 raises from lower parts of the mixing space 6 towards the upper parts thereof.

In one embodiment, the height of the blocking element 5 extends at least from the level of the lowest end of the helical bars 2a, 2b to at least the level of the uppermost end of said helical bars. In one embodiment, the blocking element 5 extends to or over the level of liquid surface height L. In another embodiment, the height of the blocking element 5 is smaller than the height H of the helical bars.

In one embodiment, the blocking element 5 is arranged or attached to a side wall 7 of the mixing space. In one embodiment, all the length of the blocking element 5 is in contact with the side wall 7. In another embodiment, the blocking element 5 is attached to the side wall 7 but at a distance therefrom by support elements 9.

In an embodiment, the blocking element 5 is a baffle. The baffle may be a vertical baffle. In another embodiment, the baffle is arranged in a position that deviates from the vertical direction.

In one embodiment, the blocking element 5 comprises a tube. The tube may be e.g. a part of a temperature controlling system (not shown) of the mixing space.

**Figure 5** schematic side view showing a flow pattern of a mixing arrangement, **Figure 6** schematic side view showing a flow pattern of another mixing arrangement and **Figure 7** schematic side view showing a flow pattern of a third mixing arrangement. In all these mixing arrangements the diameter of mixing space T is 2000 mm, and the tip speed of the mixing device was same in all the arrangements.

**Figure 5** is showing a mixing arrangement 100 wherein the ratio of the diameter D of the mixing device to the average diameter T of the mixing space, that is D/T, is 0.45. The supporting spokes 4 are straight and attached to the shaft 3 so that the angle between the spoke and the shaft is 90°.

As it can be readily seen, the flow pattern comprises a uniform downward flow close the side walls of the mixing space 6. Said uniform flow minimizes amount of energy needed for a sufficient flow in vertical direction that opposes gravitational separation of dispersion maintained in the mixing space 6. As the energy directed to the dispersion is lower, it is avoided, or at least reduced, formation of small-sized droplets in the dispersion. Also this phenomena assists in maintaining the dispersion.

**Figure 6** is showing a mixing arrangement 100 wherein the ratio of the diameter D of the mixing device to the average diameter T of the mixing space, that is D/T, is 0.50. The supporting spokes 4 are straight and attached to the shaft 3 so that there is an angle about 30° between the spoke and the shaft.

As it can be seen, the flow circulation loops in axial direction are more fragmented and local compared to the flow pattern shown in Figure 5.

**Figure 7** is showing a mixing arrangement 100 wherein the ratio of the diameter D of the mixing device to the average diameter T of the mixing space, that is D/T, is 0.50. The supporting spokes 4 are straight and attached to the shaft 3 so that the angle between the spoke and the shaft is 90°. Also here, the flow circulation loops in axial direction are more fragmented and local compared to the flow pattern shown in Figure 5.

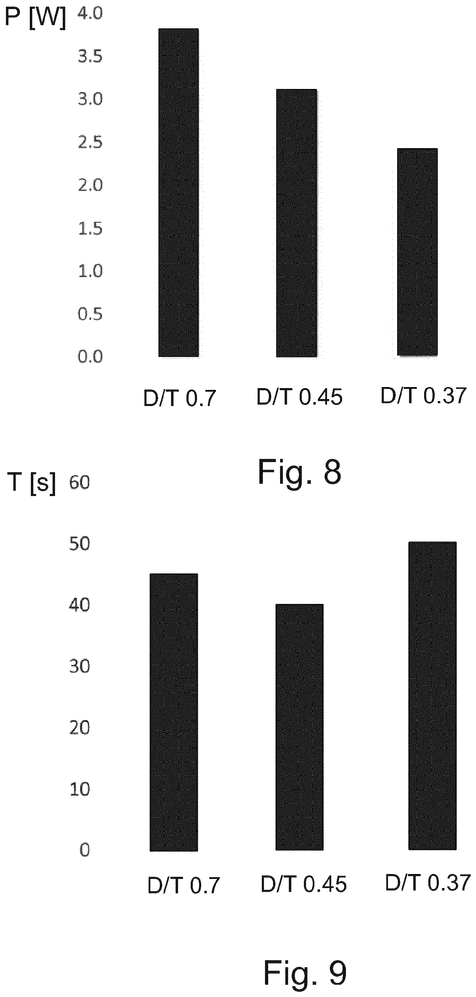

**Figure 8** illustrates power requirements in watts (W) of some arrangements in an experiment, and **Figure 9** illustrates separation time results in seconds (s) in the experiment. The diameter D of the mixing device was varied in the experiment such that values of D/T were 0.7, 0.45 and 0.37. All other dimensions and variables in the experiment were kept constant.

As it can be seen in Figure 8, the power required for maintaining dispersion through all volume of the solution increases as the diameter D is raising.

Figure 9 is showing the time for the phase disengagement, i.e. separating the dispersion again into two pure layers, taking place in a settler unit into which dispersion created by the mixing arrangement was fed. As it can be seen, the shortest and thus the most effective phase disengagement took place when the D/T was 0.45.

The invention is not limited solely to the embodiments described above, but instead many variations are possible within the scope of the claims below.

The drawings and the related description are only intended to illustrate the idea of the invention. The invention may vary in detail within the scope of the following claims.

### REFERENCE SYMBOLS

- 1: mixing device
- 2a, b: helical bar
- 3: shaft
- 4: support spoke
- 5: blocking element
- 6: mixing space
- 7: side wall
- 8: motor
- 9: support element

- 100: mixing arrangement
- 200: mixer settler unit
- 201: settler unit

- D: diameter of mixing device
- H: height of helical bars
- L: liquid surface height
- R: rotation direction
- T: diameter of mixing space
- TL: lower part diameter
- TU: upper part diameter

## Claims

1. A mixing arrangement (100) for mixing two solutions, wherein the mixing arrangement (100) comprises a mixing device (1) and a mixing space (6), the mixing device being arranged in the mixing space (6) for rotating therein,
- the mixing device (1) comprising at least two helical bars (2a, 2b) supported around a shaft (3) and rising upwards from the bottom section of the mixing space (6),
- the helical bars (2a, 2b) being fixed to the shaft (3) with support spokes (4), **characterized in that**
- the ratio of the diameter (D) of the mixing device to the average diameter (T) of the mixing space, that is D/T, is selected in range of 0.38 - 0.47.

2. The arrangement as claimed in claim 1, wherein the ratio D/T is selected in range of 0.40 - 0.45.

3. The arrangement as claimed in any of the preceding claims, wherein the ratio of the height (H) of the helical bars (2a, 2b) to liquid surface height (L), that is H/L, is 0.6 - 0.9, preferably 0.8 - 0.9.

4. The arrangement as claimed in any of the preceding claims, wherein the ratio of the height (H) of the helical bars (2a, 2b) to the diameter (D), that is H/D, is at least 1, preferably 1.5 - 2.

5. The arrangement as claimed in any of the preceding claims, wherein the mixing device (1) comprises at least three helical bars (2a, 2b).

6. The arrangement as claimed in any of the preceding claims, wherein the helical bar (2a, 2b) has a round profile.

7. The arrangement as claimed in claim 6, wherein diameter of the helical bar (2a, 2b) is selected in range of 0.03 x T - 0.05 x T.

8. The arrangement as claimed in any of the preceding claims, wherein the supporting spoke (4) is straight, first end attached to the helical bar (2a, 2b), and second end arranged to the shaft (3), wherein and the angle between the spoke (4) and the shaft (3) is 75° - 105°, preferably 85° - 95°, more preferably 90°.

9. The arrangement as claimed in any of the preceding claims, wherein the number of the supporting spokes (4) is 6 to 12.

10. The arrangement as claimed in any of the preceding claims, wherein the supporting spoke (4) has a round profile.

11. The arrangement as claimed in any of the preceding claims, wherein the mixing space (6) has an upper part and a lower part, and wherein the ratio of the diameter (TU) of the upper part and the diameter (TL) of the lower part is selected in range of 0.8 - 1.2, preferably 0.9 - 1.1.

12. The arrangement as claimed in any of the preceding claims, wherein the mixing space (6) has a cylindrical shape.

13. The arrangement as claimed in any of claims 1 - 11, wherein the mixing space (6) has a shape of truncated cone.

14. The arrangement as claimed in any of the preceding claims, wherein the average diameter (T) of the mixing space is at least 1000 mm, preferably 1000 - 5000 mm.

15. The arrangement as claimed in any of the preceding claims, wherein the mixing space (6) is provided with one or more blocking elements (5).

16. The arrangement as claimed in claim 15, wherein the blocking element (5) has a shape that extends in the same direction as the shaft (3).

17. The arrangement as claimed in claim 16, wherein the blocking element (5) is arranged to a side wall (7) of the mixing space.

18. The arrangement as claimed in any of claims 15 - 17, wherein the blocking elements (5) comprise a baffle.

19. A mixer settler unit (200), comprising the mixing arrangement (100) as claimed in any of claims 1 - 17, and
a settler unit (201) arranged for receiving material from said mixing arrangement (100).

20. The mixer settler unit (200) as claimed in claim 19, comprising at least two mixing arrangements (100) arranged in series, and
the settler unit (201) arranged for receiving material from the last of said mixing arrangements (100).

21. Use of the mixing arrangement (100) as claimed in any of claims 1 - 18 for solvent extraction in the hydrometallurgical recovery of metals.

22. Use of the mixing arrangement (100) as claimed in claim 21 for solvent extraction in the hydrometallurgical recovery of at least one metal, preferably selected from Cu, Ni, Co, Mg, Mn, Zn, Fe, U and B.

## Patentansprüche

1. Mischanordnung (100) zum Mischen von zwei Lösungen, wobei die Mischanordnung (100) eine Mischvorrichtung (1) und einen Mischraum (6) aufweist, wobei die Mischvorrichtung in dem Mischraum (6) angeordnet ist, um sich darin zu drehen,
- wobei die Mischvorrichtung (1) zumindest zwei spiralförmige Stäbe (2a, 2b) aufweist, die um eine Welle (3) herum getragen sind und sich von dem Bodenabschnitt des Mischraums (6) nach oben erheben,
- wobei die spiralförmigen Stäbe (2a, 2b) an der Welle (3) mit Tragspeichen (4) befestigt sind, **dadurch gekennzeichnet, dass**
- das Verhältnis des Durchmessers (D) der Mischvorrichtung zu dem durchschnittlichen Durchmesser (T) des Mischraums, d.h. D/T, aus einem Bereich von 0,38 bis 0,47 ausgewählt ist.

2. Anordnung nach Anspruch 1, wobei das Verhältnis D/T aus einem Bereich von 0,40 bis 0,45 ausgewählt ist.

3. Anordnung nach einem der vorhergehenden Ansprüche, wobei das Verhältnis der Höhe (H) der spiralförmigen Stäbe (2a, 2b) zu einer Flüssigkeitsoberflächenhöhe (L), d.h. H/L, 0,6 bis 0,9, bevorzugt 0,8 bis 0,9 beträgt.

4. Anordnung nach einem der vorhergehenden Ansprüche, wobei das Verhältnis der Höhe (H) der spiralförmigen Stäbe (2a, 2b) zu dem Durchmesser (D), d.h. H/D, zumindest 1, bevorzugt 1,5 bis 2 beträgt.

5. Anordnung nach einem der vorhergehenden Ansprüche, wobei die Mischvorrichtung (1) zumindest drei spiralförmige Stäbe (2a, 2b) aufweist.

6. Anordnung nach einem der vorhergehenden Ansprüche, wobei der spiralförmige Stab (2a, 2b) ein rundes Profil aufweist.

7. Anordnung nach Anspruch 6, wobei der Durchmesser des spiralförmigen Stabs (2a, 2b) aus einem Bereich von 0,03 x T bis 0,05 x T ausgewählt ist.

8. Anordnung nach einem der vorhergehenden Ansprüche, wobei die Tragspeiche (4) gerade ist, ihr erstes Ende an dem spiralförmigen Stab (2a, 2b) befestigt ist und ihr zweites Ende an der Welle (3) befestigt ist, wobei der Winkel zwischen der Speiche (4) und der Welle (3) 75° bis 105°, bevorzugt 85° bis 95°, stärker bevorzugt 90° beträgt.

9. Anordnung nach einem der vorhergehenden Ansprüche, wobei die Anzahl von Tragspeichen (4) 6 bis 12 beträgt.

10. Anordnung nach einem der vorhergehenden Ansprüche, wobei die Tragspeiche (4) ein rundes Profil aufweist.

11. Anordnung nach einem der vorhergehenden Ansprüche, wobei der Mischraum (6) einen oberen Teil und einen unteren Teil aufweist und wobei das Verhältnis des Durchmessers (TU) des oberen Teils und der Durchmesser (TL) des unteren Teils aus einem Bereich von 0,8 bis 1,2, bevorzugt 0,9 bis 1,1 ausgewählt ist.

12. Anordnung nach einem der vorhergehenden Ansprüche, wobei der Mischraum (6) eine zylindrische Form aufweist.

13. Anordnung nach einem der Ansprüche 1 bis 11, wobei der Mischraum (6) eine Form eines Kegelstumpfs aufweist.

14. Anordnung nach einem der vorhergehenden Ansprüche, wobei der durchschnittliche Durchmesser (T) des Mischraums zumindest 1000 mm, bevorzugt 1000 bis 5000 mm beträgt.

15. Anordnung nach einem der vorhergehenden Ansprüche, wobei der Mischraum (6) mit einem oder mehr Blockierelementen (5) versehen ist.

16. Anordnung nach Anspruch 15, wobei das Blockierelement (5) eine Form aufweist, die sich in der gleichen Richtung wie die Welle (3) erstreckt.

17. Anordnung nach Anspruch 16, wobei das Blockierelement (5) an einer Seitenwand (7) des Mischraums angeordnet ist.

18. Anordnung nach einem der Ansprüche 15 bis 17, wobei die Blockierelemente (5) eine Ablenkplatte aufweist.

19. Mischerabsetzbeckeneinheit (200), aufweisend die Mischanordnung (100) nach einem der Ansprüche 1 bis 17 und eine Absetzbeckeneinheit (201), die zum Aufnehmen von Material von der Mischanordnung (100) angeordnet ist.

20. Mischerabsetzbeckeneinheit (200) nach Anspruch 19, aufweisend zumindest zwei Mischanordnungen (100), die in Reihe angeordnet sind, und die Absetzbeckeneinheit (201), die zum Aufnehmen von Material von der letzten der Mischanordnungen (100) angeordnet ist.

21. Verwendung der Mischanordnung (100) nach einem der Ansprüche 1 bis 18 zur Lösungsmittelextraktion in der hydrometallurgischen Rückgewinnung von Metallen.

22. Verwendung der Mischanordnung (100) nach Anspruch 21 zur Lösungsmittelextraktion in der hydrometallurgischen Rückgewinnung von zumindest einem Metall, bevorzugt ausgewählt von Cu, Ni, Co, Mg, Mn, Zn, Fe, U und B.

## Revendications

1. Agencement de mélange (100) permettant de mélanger deux solutions, dans lequel l'agencement de mélange (100) comprend un dispositif de mélange (1) et un espace de mélange (6), le dispositif de mélange étant agencé dans l'espace de mélange (6) pour tourner dans celui-ci,
- le dispositif de mélange (1) comprenant au moins deux barres hélicoïdales (2a, 2b) supportées autour d'un arbre (3) et s'élevant vers le haut à partir de la section inférieure de l'espace de mélange (6),
- les barres hélicoïdales (2a, 2b) étant fixées à l'arbre (3) avec des rayons de support (4), **caractérisé en ce que**
- le rapport du diamètre (D) du dispositif de mélange au diamètre moyen (T) de l'espace de mélange, c'est-à-dire D/T, est sélectionné dans une plage de 0,38 à 0,47.

2. Agencement tel que revendiqué dans la revendication 1, dans lequel le rapport D/T est sélectionné dans une plage de 0,40 à 0,45.

3. Agencement tel que revendiqué dans l'une quelconque des revendications précédentes, dans lequel le rapport de la hauteur (H) des barres hélicoïdales (2a, 2b) à la hauteur de surface de liquide (L), c'est-à-dire H/L, est 0,6 à 0,9, de préférence 0,8 à 0,9.

4. Agencement tel que revendiqué dans l'une quelconque des revendications précédentes, dans lequel le rapport de la hauteur (H) des barres hélicoïdales (2a, 2b) au diamètre (D), c'est-à-dire H/D, est au moins 1, de préférence 1,5 à 2.

5. Agencement tel que revendiqué dans l'une quelconque des revendications précédentes, dans lequel le dispositif de mélange (1) comprend au moins trois barres hélicoïdales (2a, 2b).

6. Agencement tel que revendiqué dans l'une quelconque des revendications précédentes, dans lequel la barre hélicoïdale (2a, 2b) présente un profil rond.

7. Agencement tel que revendiqué dans la revendication 6, dans lequel un diamètre de la barre hélicoïdale (2a, 2b) est sélectionné dans une plage de 0,03 x T à 0,05 x T.

8. Agencement tel que revendiqué dans l'une quelconque des revendications précédentes, dans lequel le rayon de support (4) est droit, une première extrémité étant fixée à la barre hélicoïdale (2a, 2b), et une seconde extrémité étant agencée sur l'arbre (3), et dans lequel l'angle entre le rayon (4) et l'arbre (3) est 75° à 105°, de préférence 85° à 95°, plus de préférence 90°.

9. Agencement tel que revendiqué dans l'une quelconque des revendications précédentes, dans lequel le nombre des rayons de support (4) est 6 à 12.

10. Agencement tel que revendiqué dans l'une quelconque des revendications précédentes, dans lequel le rayon de support (4) présente un profil rond.

11. Agencement tel que revendiqué dans l'une quelconque des revendications précédentes, dans lequel l'espace de mélange (6) présente une partie supérieure et une partie inférieure, et dans lequel le rapport du diamètre (TU) de la partie supérieure et du diamètre (TL) de la partie inférieure est sélectionné dans une gamme de 0,8 à 1,2, de préférence 0,9 à 1,1.

12. Agencement tel que revendiqué dans l'une quelconque des revendications précédentes, dans lequel l'espace de mélange (6) présente une forme cylindrique.

13. Agencement tel que revendiqué dans l'une quelconque des revendications 1 à 11, dans lequel l'espace de mélange (6) présente une forme de cône tronqué.

14. Agencement tel que revendiqué dans l'une quelconque des revendications précédentes, dans lequel le diamètre moyen (T) de l'espace de mélange est au moins 1 000 mm, de préférence 1 000 à 5 000 mm.

15. Agencement tel que revendiqué dans l'une quelconque des revendications précédentes, dans lequel l'espace de mélange (6) est fourni avec un ou plusieurs éléments de blocage (5).

16. Agencement tel que revendiqué dans la revendication 15, dans lequel l'élément de blocage (5) présente une forme qui s'étend dans la même direction que l'arbre (3).

17. Agencement tel que revendiqué dans la revendication 16, dans lequel l'élément de blocage (5) est agencé sur une paroi latérale (7) de l'espace de mélange.

18. Agencement tel que revendiqué dans l'une quelconque des revendications 15 à 17, dans lequel les éléments de blocage (5) comprennent un déflecteur.

19. Unité de décanteur mélangeur (200), comprenant l'agencement de mélange (100) tel que revendiqué dans l'une quelconque des revendications 1 à 17, et une unité de décanteur (201) agencée pour recevoir un matériau en provenance dudit agencement de mélange (100).

20. Unité de décanteur mélangeur (200) telle que revendiquée dans la revendication 19, comprenant au moins deux agencements de mélange (100) agencés en série, et l'unité de décanteur (201) agencée pour recevoir un matériau en provenance du dernier desdits agencements de mélange (100).

21. Utilisation de l'agencement de mélange (100) tel que revendiqué dans l'une quelconque des revendications 1 à 18 pour une extraction par solvant dans la récupération hydrométallurgique de métaux.

22. Utilisation de l'agencement de mélange (100) telle que revendiquée dans la revendication 21 pour une extraction par solvant dans la récupération hydrométallurgique d'au moins un métal, de préférence sélectionné parmi Cu, Ni, Co, Mg, Mn, Zn, Fe, U et B.
